# EUROPÄISCHE PATENTSCHRIFT

(11) **EP 2 175 093 B1**
(45) Veröffentlichungstag und Bekanntmachung des Hinweises auf die Patenterteilung: **01.08.2018**
(21) Anmeldenummer: 09012436.3
(22) Anmeldetag: 01.10.2009
(51) Int. Cl.: E05B 63/00, E05B 65/00, E05C 1/06, F16B 1/04, F16B 5/02, E05B 1/00, F16B 19/02

(54) **Rastbolzen mit Verriegelungsmechanik**
Locking pin with locking mechanism
Boulon d'arrêt doté d'un mécanisme de verrouillage

(30) Priorität: 07.10.2008 DE 202008013348 U
(43) Veröffentlichungstag der Anmeldung: 14.04.2010
(73) Patentinhaber: Otto Ganter GmbH & Co. KG Normteilefabrik, 78120 Furtwangen (DE)
(72) Erfinder: Ganter, Stefan, 78120 Furtwangen (DE)
(74) Vertreter: Riebling, Peter

(56) Entgegenhaltungen:
- WO-A2-03/101757
- DE-A1- 3 024 154
- DE-U- 1 829 999
- DE-U1- 29 521 521
- GB-B- 2 398 827

## Beschreibung

Die Erfindung betrifft einen neuartigen Rastbolzen mit Verriegelungsmechanik nach dem Oberbegriff des Schutzanspruchs 1.

Es existieren bereits zahlreiche Rastriegel mit Sperren in Arbeits- und Ruheposition.

So ist ein derartiger Rastbolzen auch bereits durch die auf die gleiche Anmelderin zurückgehende DE 202005011092 U1 bekannt geworden. Dort ist ein Rastriegel offenbart, mit mittels Drehbewegung axial antreibbarem Raststift, zur Ent- oder Verriegelung von mindestens zwei Bauteilen zueinander, und mit einer an mindestens einem der Bauteile befestigbaren Gehäusehülse, in deren Innenraum der Raststift drehbar und axial verschiebbar gelagert ist, wodurch dieser eine Ent- oder Verriegelung zu mindestens einem anderen Bauteil bewirkt, wobei für das Bewegen des Raststiftes mit oder entgegen der Kraft einer Feder in seine, die mindestens zwei Bauteile ver- oder entriegelnde Position, mindestens eine radiale Schraubschlitz-Radialstift-Führung zwischen dem Raststift und der Gehäusehülse vorgesehen ist, wobei die Schraubschlitz-Radialstift-Führung für das Halten und sichernde Rasten des Raststiftes in seiner, die mindestens zwei Bauteile ver- oder entriegelnden Position vorgesehen ist, für welche mindestens eine sich in axialer Richtung erstreckende Endnut vorgesehen ist, wobei der Radialstift in die mindestens eine axiale Endnut unter Verringerung der Kraft der Feder derart einrastbar ist, dass der Radialstift vor dem Zurückdrehen durch axiales Ziehen oder Drücken entgegen der Kraft der Feder axial verschoben und damit entriegelt werden muss. Auch hier ist es daher nötig, die Handhabe des Raststiftes in zwei entgegengesetzte Richtungen zu drehen, soll der Raststift von der entriegelten in die verriegelte Position axial verschoben werden und analog umgekehrt.

Auch ist ein derartiger Rastbolzen auch bereits durch die auf die gleiche Anmelderin zurückgehende DE 10338621 A1 bekannt geworden. Dort ist ein federbelasteter Rastbolzen offenbart, mit einem Betätigungsknopf und einem mit diesem verbundenen Bolzen, der federbelastet in einer Hülse verschiebbar ist, die ein Gewinde aufweist und in eine zugeordnete Bohrung in einem Maschinen- oder Möbelteil einschraubbar ist, wobei der Bolzen in die Bohrung einrückbar ist und der Rastbolzen gegebenenfalls eine Rastsperre aufweist, die den gezogenen Bolzen in seiner angehobenen Stellung arretiert, wobei am Betätigungsknopf ein in axialer Richtung ausgerichtetes Hülsenteil mit einer Mehrkantprofil-Ausnehmung angeformt ist, in der die Hülse längsverschieblich federbelastet mit einem Mehrkantbund eingreift. Auch hier ist es nötig, den Betätigungsknopf des Rastbolzens in zwei entgegengesetzte Richtungen zu drehen, sowie in einer axialen Richtung entgegen der Federkraft zu verschieben, soll der Rastbolzen von der entriegelten in die verriegelte Position axial verschoben werden und analog umgekehrt. Aus der DE29521521 U ist ein Rastbolzen mit Verriegelungsmechanik nach dem Oberbegriff des Anspruches 1 bzw. des Anspruchs 2 bekannt. Im Bereich der elektrischen Druckknopf-Schalter ebenso wie im Bereich von Druckknopf-Schreibgeräten (z.B. Kugelschreiber) gibt es Mechaniken, welche eine herzförmige Kulissenkurve aufweisen, in die ein Finger radial eingreift, und somit ein Sperren in Arbeits- und Ruheposition erfolgt, wobei eine Betätigung des Druckknopfes immer nur in einer Richtung erfolgt.

Bekannt ist auch ein Kugelschreiber-Prinzip mit reiner Drehmechanik oder Drück-Drehmechanik, wobei wiederum ein Sperren in Arbeits- und Ruheposition erfolgt. Die bekannte "Swan-Fassung" bei Kfz-Glühbirnen ist mit einem radialen Stift der Glühbirne ausgeführt, der in eine axial-radial-axial verlaufende Nut in der Fassung eingreift, so dass wiederum ein Sperren in Arbeits- und Ruheposition erfolgt.

Aufgabe der vorliegenden Erfindung ist es, einen gattungsgemäßen Rastbolzen mit Verriegelungsmechanik derart weiterzubilden, dass die Betätigung des Rastbolzens für das Verriegeln oder das Entriegeln immer nur in einer einzigen Betätigungsrichtung entweder durch Drücken oder aber durch Ziehen erfolgt.

Zur Lösung dienen die Merkmale des unabhängigen Schutzanspruchs 1 und/oder des Anspruches 2. Vorteilhafte Weiterbildungen der vorliegenden Erfindung sind Gegenstand der abhängigen Ansprüche. Ein Merkmal ist, dass der Rastbolzen im Wesentlichen als Verschiebe- und Arretiermechanik (Verriegelungsmechanik) für das Sperren in Arbeits- und Ruheposition eine Art "Kugelschreibermechanik" aufweist und damit der Raststift nur durch Druck (oder auch nur durch Zug) betätigt wird, entgegen oder mittels der Kraft einer Feder.

Die Verschiebe- und Arretiermechanik stimmt im Wesentlichen mit der Verschiebekulisse einer Kugelschreiberführung überein. Es handelt sich also um eine herkömmliche Schaltmechanik, wie sie beispielsweise bei Kugelschreibern und dergleichen verwendet wird. Erfindungsgemäß, ist dabei eine Kugel in einer axial geschlossenen aber umfänglich durchgängigen oberen endseitigen Innenringnut im Innenmantel der Bohrung in der Hülse aufgenommen und kann darin laufen, wobei die Kugel weiterhin in einer herzförmigen Kulissenführung (Herzkurve) im Außenmantel des Raststiftes aufgenommen ist und kann darin laufen.

Der Unterschied zu den Kugelschreiberführungen ist, dass der erfindungsgemäße Rastbolzen eine insbesondere gehärtete Kugel hat, die in einer insbesondere gehärteten Laufbahn des Raststiftes entlang läuft, wobei die Kugel in einer zugeordneten Ringnut am Innenumfang der Rasthülse angeordnet ist. Erfindungsgemäß ist vorgesehen, dass der Knopf einen Innensechskant aufweist, der mit dem zugeordneten Außensechskant der Hülse übereinstimmt, so dass eine verdrehgesicherte Lagerung des Knopfes gegeben ist. Der Knopf ist also außen auf der Hülse verschiebbar gelagert und verdrehgesichert verschiebbar auf dem Außenumfang der Hülse angeordnet.

Die Sechskantführung zwischen dem Betätigungsknopf und der Metallhülse sichert den Zustand, dass die Kugel immer in der richtigen Bahn läuft.

Wesentlich ist also, dass der Bolzen mit der Kulissenführung gegenüber der Metallhülse mit der darin gelagerten Kugel verdrehsicher gemacht ist. Dies gewährleistet eine Schaltfunktion, die weniger störungsanfällig ist. Dies wird erzielt, indem der Bolzen über den Knopf in einem Sechskant der Metallhülse geführt und damit gegen Verdrehung gesichert ist.

Im Folgenden wird die Erfindung anhand von Zeichnungen beispielhaft näher erläutert, aus welchen weitere Merkmale und Vorteile hervorgehen und welche nur eine Ausführungsform darstellen.

Es zeigt:
Figur 1: Den erfindungsgemäßen Rastbolzen in ausgefahrener Verriegelungsstellung, in einer perspektivischen Darstellung von unten her gesehen;
Figur 2: Den Rastbolzen nach Figur 1 in einer radialen Vorderansicht;
Figur 3: Den Rastbolzen nach Figur 2 im axialen Längsschnitt;
Figur 4: Den Rastbolzen nach Figuren 1-3 in Schaltstellung, d.h. Zwischenstellung zwischen Figuren 1-3 und Figur 5;
Figur 5: Den Rastbolzen nach Figuren 1-3 im eingefahrenen Zustand;
Figur 6: Draufsicht auf den Rastbolzen nach Figuren 1-5;
Figur 7: Radiale Vorderansicht auf die Führungshülse;
Figur 8: Schnitt durch die Führungshülse nach Figur 7;
Figur 9: Draufsicht auf die Führungshülse nach Figur 7;
Figur 10: Radiale Vorderansicht auf den Raststift;
Figur 11: Herzkurve im Raststift nach Figur 10;
Figur 12: Längsschnitt durch den oberen Teil des Raststifts nach Figur 10.

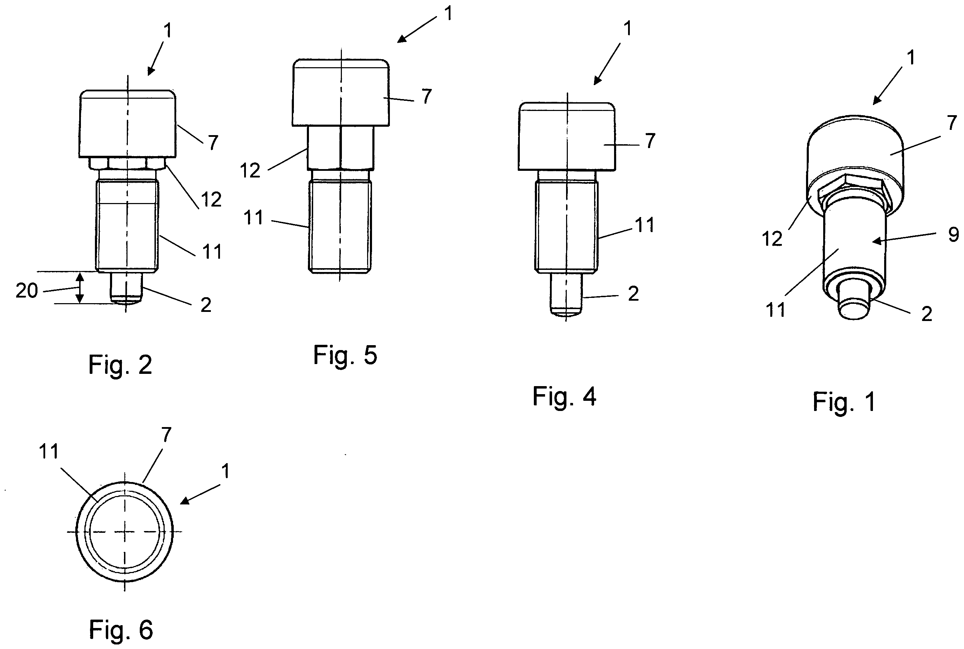

Die Figuren 1-6 zeigen den erfindungsgemäßen Rastbolzen 1 in verschiedenen Ansichten und Zuständen, nämlich mit ausgefahrenem oder eingefahrenem Raststift 2.

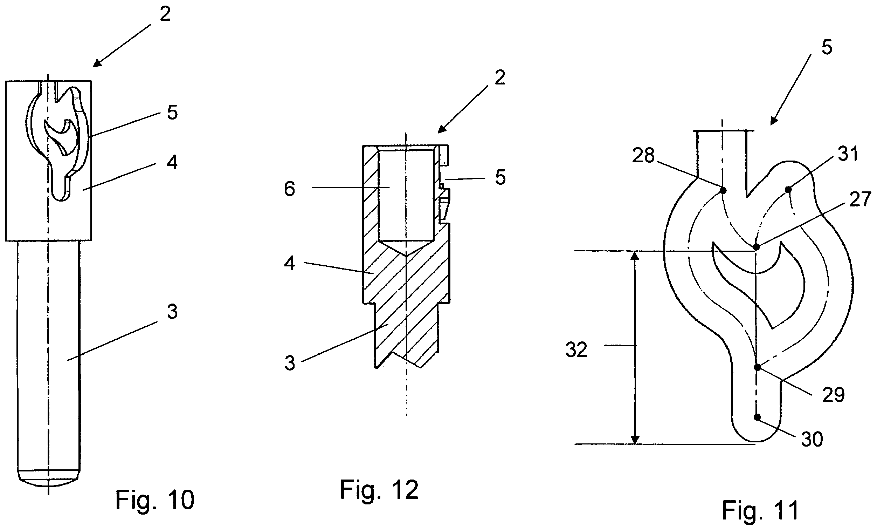

Der Raststift 2, der in Figuren 10 bis 12 näher dargestellt ist, beinhaltet einen durchmesserkleineren Verriegelungsteil 3 und einen durchmessergrößeren Rastteil 4, in dem sich die herzförmige Kulisse 5 befindet, sowie eine Bohrung 6 für die Aufnahme eines Stiftes des Knopfes 7.

Anstatt einer Bohrung 6 kann auch ein Stift vorgesehen sein, der in eine Ausnehmung des Knopfes 7 eingreift.

Beide Varianten des Knopfes 7 sind topfförmig ausgebildet, wobei im Zentrum des Bodens des Topfes der Stift oder die Ausnehmung zur Verbindung mit dem Raststift 2 vorhanden ist. Auf dem Innenmantel des Topfes ist ein Innensechskant 8 eingebracht, der mit einem Außensechskant 12 auf dem Mantel der Hülse 9 als Verdrehsicherung zwischen Raststift 2 und Hülse 9 zusammen wirkt.

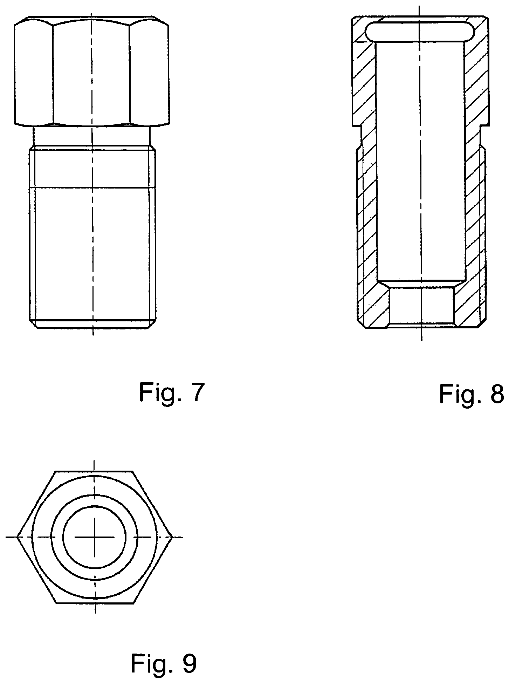

Der Raststift 2 durchgreift eine zentrale Durchgangsbohrung 10 einer Hülse 9, die in Figuren 7-9 näher gezeigt ist. An dem unteren Ende der Hülse 9 ist ein Außengewinde 11 über 50% bis 75% der axialen Länge eingebracht, wobei am oberen Ende der Hülse 9 der Außensechskant 12 vorhanden ist, welcher durch den Innensechskant 8 des Knopfes 7 übergriffen wird und somit eine Verdrehsicherung zwischen Raststift 2 und Hülse 9 erzeugt.

Zwischen dem durchmesserkleineren Verriegelungsteil 3 des Raststiftes 2 und der Bohrung 10 ist eine Druckfeder 13 eingesetzt, welche sich an dem Außenringbund 14 zwischen Verriegelungsteil 3 und Rastteil 4 abstützt, sowie an der Innenseite des Innenringbundes 15 an der Unterseite der Hülse 9.

Der Raststift 2 ist mit seinem Rastteil 4 oben in der Bohrung 10 der Hülse 9 geführt, sowie mit seinem Verriegelungsteil 3 unten in der Bohrung 10 im Ringbund 15 der Hülse 9, so dass der gesamte Raststift 2 mitsamt Knopf 7 entgegen der Kraft der Feder 13 in axialer Rastrichtung 16 verschoben werden kann, da die Hülse 9 selbst mit ihrem Außengewinde.

Drückt man also in Verriegelungsrichtung 16 auf den Knopf 7, dann wird der Raststift 2 in dieser Richtung axial aus der Ruhestellung nach Figur 5 verschoben in die Schaltstellung nach Figur 4 und weiter in die Raststellung nach den Figuren 1-3. Der Raststift 2 ist dabei in der Schaltstellung am weitesten aus der Hülse 9 ausgefahren, fährt aber nach Loslassen des Knopfes 7 selbsttätig wieder ein kleines Stück in die Hülse 9 zurück. Dies ist bedingt durch die herzförmige Kurvenform der Kulisse 17 (siehe Figur 11).

Drückt man den Knopf 7 erneut in Verriegelungsrichtung 16, fährt damit der Raststift 2 in Entriegelungsrichtung 17 wieder von Raststellung nach den Figuren 1-3 über die Schaltstellung nach Figur 4 in die Ruhestellung nach Figur 5.

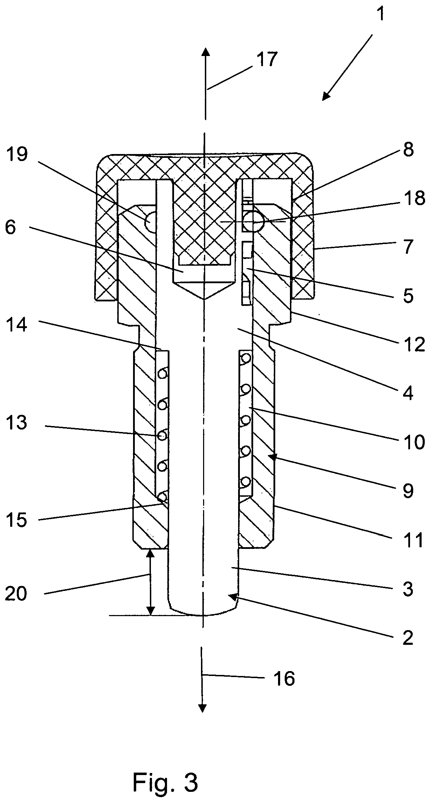

Für diese Mechanik zuständig ist eine Kugel 18 (siehe Figur 3), welche zum einen in einer axial geschlossenen und umfänglich durchgängigen oberen endseitigen Innenringnut 19 im Innenmantel der Bohrung 10 in der Hülse 9 liegt und darin laufen kann, und zum andern in der Herzkurve 5 liegt und darin laufen kann.

Mit dem Bezugszeichen 20 in Figuren 2 und 3 ist der Überstand des Raststifts 2 über die untere Stirnseite der Hülse 9 bezeichnet, wenn der Raststift 2 in Funktionsstellung (Verriegelungsstellung) aus der Hülse 9 ausgefahren ist.

Diese Herzkurve 5 ist in Figur 11 näher dargestellt und besteht im Wesentlichen aus sechs Teilnuten 21-26. Die randoffene axiale erste Teilnut 21 verläuft ein kleines Stück axial vom obersten Ende des Rastteils 4 aus bis zu einer linksbogenförmigen zweiten Teilnut 22, welche sich axial etwa dreimal so weit erstreckt, als die erste Teilnut 21. An diese zweite Teilnut 22 schließt sich wiederum eine axiale dritte Teilnut 23 an, die etwa die gleiche axiale Erstreckung hat, als die erste axiale Teilnut 21. An diese axiale dritte Teilnut 23 schließt sich dann eine rechtsbogenförmige vierte Teilnut 24 an, mit etwa der gleichen Axialerstreckung als die zweite Teilnut 22. An diese vierte Teilnut 24 schließt sich eine linksbogenförmige fünfte Teilnut 25 an mit einer Axialerstreckung wie die axiale erste und dritte Teilnut 21 und 23. An fünfte diese Teilnut 25 schließt sich schließlich eine linksbogenförmige sechste Teilnut 26 an, wieder etwa mit der gleichen axialen Erstreckung wie schon die erste, dritte und fünfte Teilnut 21, 23, 25.

Die Kugel 18 selbst wird bei der Erstmontage über die axial randoffene erste Teilnut 21 in die Herzkurve 5 eingefädelt und rastet im Punkt 27 bei ausgefahrenem Raststift 2.

Sobald der Knopf 7 gedrückt wird, fährt die Kugel 18 die Teilnuten 22-26 in einer ersten Ausführungsform in Gegenuhrzeigerrichtung ab:
Bei Drücken des Knopfes 7 fährt die Kugel 18 zunächst vom Punkt 27 des Anfangs der sechsten Teilnut 26 in den Punkt 28 des Anfangs der zweiten Teilnut 22, um bei Entlastung des Knopfes 7 am Punkt 29 vorbei zu gleiten und im Punkt 30 des Endes der dritten Teilnut 23 zu rasten.

Bei erneutem Drücken des Knopfes 7 fährt die Kugel 18 vom Punkt 30 des Endes der dritten Teilnut 23 zurück am Punkt 29 des Anfangs der vierten Teilnut 24 vorbei in die vierte Teilnut 24 in den Punkt 31 des Endes der vierten Teilnut 24, um bei Entlastung des Knopfes 7 im Punkt 27 des Anfangs der sechsten Teilnut 26 zu rasten.

Bei erneutem Drücken des Knopfes 7 wird dann der erste Halb-Zyklus wiederholt - bei erneutem Drücken des Knopfes 7 wird dann der zweite Halb-Zyklus wiederholt usw..

Es gibt daher im Betrieb zwei Bewegungsabläufe der Kugel 18 in der Kulisse 5:
Erstens vom eingefahrenen in den ausgefahrenen Zustand des Raststiftes 2: die Kugel 18 läuft vom unteren Rastpunkt 30 über den Kreuzungspunkt 29 und den rechten oberen Totpunkt 31 zum oberen Rastpunkt 27.

Zweitens vom ausgefahrenen in den eingefahrenen Zustand des Raststiftes 2: die Kugel 18 läuft vom oberen Rastpunkt 27 über den linken oberen Totpunkt 28 und den Kreuzungspunkt 29 in den unteren Rastpunkt 30.

In einer zweiten Ausführungsform fährt die Kugel 18 die Teilnuten 22-26 analog umgekehrt zur ersten Ausführungsform in Gegenuhrzeigerrichtung ab. Vom eingefahrenen Zustand des Raststiftes 2 aus über die Positionen 30, 29, 28 und 27 und vom ausgefahrenen Zustand des Raststiftes 2 aus über die Positionen 27, 31, 29 und 30.

Der axiale Abstand 32 (siehe Figur 11) zwischen den beiden Rastpunkten 27 und 30 der Kugel 18 in der Kulisse 5 entspricht dem Überstand 20 des Raststiftes 2 über die untere Stirnseite der Hülse 9.

### Zeichnungslegende

1. Rastbolzen
2. Raststift
3. Verriegelungsteil von 2
4. Rastteil von 2
5. herzförmige Kulisse
6. Bohrung in 4
7. Knopf
8. Innensechskant in 7
9. Hülse
10.Durchgangsbohrung in 9
11.Außengewinde auf 9
12.Außensechskant auf 9
13.Druckfeder
14.Außenringbund zwischen 3 und 4
15.Innenringbund in 9 bzw. 10
16.Verriegelungsrichtung von 2 und Drückrichtung von 7
17.Entriegelungsrichtung von 2
18.Kugel
19.Innenringnut für 18
20.Überstand von 3
21.erste Teilnut von 5
22.zweite Teilnut von 5
23.dritte Teilnut von 5
24.vierte Teilnut von 5
25.fünfte Teilnut von 5
26.sechste Teilnut von 5
27.oberer Rastpunkt für 18 bei ausgefahrenem Raststift 2
28.oberer Lagepunkt
29.unterer Lagepunkt
30.unterer Rastpunkt für 18 bei eingefahrenem Raststift 2
31.oberer Lagepunkt
32.Abstand zwischen Rastpunkten 27 und 30

## Patentansprüche

1. Rastbolzen (1) mit Verriegelungsmechanik (5, 18), mit einer an einem Maschinenteil festlegbaren Hülse (9) und einem mit einem Knopf (7) verbundenen Raststift (2), der in einer Durchgangsbohrung (10) der Hülse (9) axial entgegen und mittels der Kraft einer Feder (13) durch Betätigen des Knopfes (7) verschiebbar ist, wodurch der Raststift (2) mittels der Verriegelungsmechanik (5, 18) in zwei Rastpositionen (27, 30) bringbar ist, welche einer eingefahrenen Ruhe-/Entriegelungsposition (30) und einer ausgefahrenen Arbeits-/Verriegelungsposition (27) entsprechen, wobei die Verriegelungsmechanik (5, 18) eine Art Kugelschreibermechanik ist und der Raststift (2) nur durch Druck in Verriegelungsrichtung (16) auf den Knopf (7) betätigt wird, **dadurch gekennzeichnet, dass** der Knopf (7) einen Innensechskant aufweist, der mit einem zugeordneten Außensechskant der Hülse (9) übereinstimmt, und dass die Verriegelungsmechanik eine Kugel (18) aufweist, welche in einer Ringnut am Innenumfang der Hülse (9) und in einer herzförmigen Kulissenführung (5) im Außenmantel des Raststiftes (2) aufgenommen ist.

2. Rastbolzen (1) mit Verriegelungsmechanik (5, 18), mit einer an einem Maschinenteil festlegbaren Hülse (9) und einem mit einem Knopf (7) verbundenen Raststift (2), der in einer Durchgangsbohrung (10) der Hülse (9) axial entgegen und mittels der Kraft einer Feder (13) durch Betätigen des Knopfes (7) verschiebbar ist, wodurch der Raststift (2) mittels der Verriegelungsmechanik (5, 18) in zwei Rastpositionen (27, 30) bringbar ist, welche einer eingefahrenen Ruhe-/Entriegelungsposition (30) und einer ausgefahrenen Arbeits-/Verriegelungsposition (27) entsprechen, wobei die Verriegelungsmechanik (5, 18) eine Art Kugelschreibermechanik ist und der Raststift (2) nur durch Zug in Entriegelungsrichtung (17) am Knopf (7) betätigt wird, **dadurch gekennzeichnet,** der Knopf (7) einen Innensechskant aufweist, der mit einem zugeordneten Außensechskant der Hülse (9) übereinstimmt, und dass die Verriegelungsmechanik eine Kugel (18) aufweist, welche in einer Ringnut am Innenumfang der Hülse (9) und in einer herzförmigen Kulissenführung (5) im Außenmantel des Raststiftes (2) aufgenommen ist.

3. Rastbolzen (1) nach Anspruch 1 oder 2, **dadurch gekennzeichnet, dass** die Kugel (18) in einer axial geschlossenen aber umfänglich durchgängigen oberen endseitigen Innenringnut (19) im Innenmantel der Bohrung (10) in der Hülse (9) aufgenommen ist und darin laufen kann, .

4. Rastbolzen (1) nach Anspruch 3, **dadurch gekennzeichnet, dass** die Kulissenführung (5) in einem Rastteil (4) des Raststiftes (2) eingebracht ist, an welchem auch der Knopf (7) befestigt ist..

5. Rastbolzen (1) nach einem der Ansprüche 1 bis 4, **dadurch gekennzeichnet, dass** die Hülse (9) in ihrer Durchgangsbohrung (10) einen Innenringbund (15) aufweist, an dem sich die Feder (13) mit ihrem einen Ende abstützt, wobei die Feder (13) sich mit ihrem anderen Ende auf einem Ringbund (14) zwischen Verriegelungsteil (3) und Rastteil (4) des Raststiftes (2) abstützt.

6. Rastbolzen (1) nach einem der Ansprüche 1 bis 5, **dadurch gekennzeichnet, dass** die Kugel (18) und die Kulissenführung (5) insbesondere mittels Nitrierung gehärtet sind.

7. Rastbolzen (1) nach einem der Ansprüche 1 bis 6, **dadurch gekennzeichnet, dass** zwischen dem mit dem Raststift (2) verbundenen Knopf (7) und der Hülse (9), welche den Raststift (2) in ihrer Durchgangsbohrung (10) axial führend aufnimmt, eine verdrehsichernde formschlüssige Führung (8, 12) vorhanden ist, welche eine axiale Relativbewegung zwischen Knopf (7) und Hülse (9) gestattet, jedoch eine drehende Relativbewegung zwischen Knopf (7) und Hülse (9) unterbindet.

8. Rastbolzen (1) nach einem Anspruch 7, **dadurch gekennzeichnet, dass** die verdrehsichernde Führung (8, 12) zwischen Knopf (7) und Hülse (9) durch eine Sechskantführung bewerkstelligt ist, und der Knopf (7) einen Innensechskant (8) aufweist, der mit einem zugeordneten Außensechskant (12) der Hülse (9) etwa übereinstimmt und der Innensechskant (8) des Knopfes (7) den Außensechskant (12) der Hülse (9) mindestens teilweise überdeckt, sowohl in der eingefahrenen Ruhe-/Entriegelungsposition (30) und auch in der ausgefahrenen Arbeits-/Verriegelungsposition (27) des Raststiftes (2).

9. Rastbolzen (1) nach einem der Ansprüche 1 bis 8, **dadurch gekennzeichnet, dass** die Kugel gehärtet ist und in einer gehärteten Laufbahn des Raststifts (2) entlang läuft.

10. Rastbolzen (1) nach einem der Ansprüche 1 bis 9, **dadurch gekennzeichnet, dass,** der Knopf (7) topfförmig ausgebildet ist.

## Claims

1. Locking bolt (1) with locking mechanism (5, 18), having a sleeve (9) which can be fixed to a machine part and a locking pin (2) connected to a push-button (7) and which can be displaced in a passage bore (10) of the sleeve (9) axially against and by means of the force of a spring (13) by actuating the push-button (7), whereby the locking pin (2) can be brought by means of the locking mechanism (5, 18) into two locked positions (27, 30) which correspond to a moved-in rest/unlocked position (30) and a moved-out working/locked position (27), wherein the locking mechanism (5, 18) is a type of ball-point pen mechanism and the locking pin (2) is actuated only by pressure in locking direction (16) on the push-button (7), **characterised in that** the push-button (7) has a hexagonal recess which matches an assigned external hexagon of the sleeve (9), and **in that** the locking mechanism has a ball (18) which is accommodated in an annular groove on the inner periphery of the sleeve (9) and in a heart-shaped connecting link guide (5) in the outer casing of the locking pin (2).

2. Locking bolt (1) with locking mechanism (5, 18), having a sleeve (9) which can be fixed to a machine part and a locking pin (2) connected to a push-button (7) and which can be displaced in a passage bore (10) of the sleeve (9) axially against and by means of the force of a spring (13) by actuating the push-button (7), whereby the locking pin (2) can be brought by means of the locking mechanism (5, 18) into two locked positions (27, 30) which correspond to a moved-in rest/unlocked position (30) and a moved-out working/locked position (27), wherein the locking mechanism (5, 18) is a type of ball-point pen mechanism and the locking pin (2) is actuated only by pulling in unlocking direction (17) on the push-button (7), **characterised in that** the push-button (7) has a hexagonal recess which matches an assigned external hexagon of the sleeve (9), and **in that** the locking mechanism has a ball (18) which is accommodated in an annular groove on the inner periphery of the sleeve (9) and in a heart-shaped connecting link guide (5) in the outer casing of the locking pin (2).

3. Locking bolt (1) according to claim 1 or 2, **characterised in that** the ball (18) is accommodated in an axially closed but peripherally universal upper end-side inner annular groove (19) in the inner casing of the bore (10) in the sleeve (9) and may run therein.

4. Locking bolt (1) according to claim 3, **characterised in that** the connecting link guide (5) is introduced in a locking part (4) of the locking pin (2), to which the push-button (7) is also attached.

5. Locking bolt (1) according to one of claims 1 to 4, **characterised in that** the sleeve (9) in its passage bore (10) has an inner collar (15), on which the spring (13) is supported by its one end, wherein the spring (13) is supported by its other end on a collar (14) between locking part (3) and locking part (4) of the locking pin (2).

6. Locking bolt (1) according to one of claims 1 to 5, **characterised in that** the ball (18) and the connecting link guide (5) are cured in particular by means of nitriding.

7. Locking bolt (1) according to one of claims 1 to 6, **characterised in that** between the push-button (7) connected to the locking pin (2) and the sleeve (9), which accommodates the locking pin (2) in its passage bore (10) to be axially guiding, a rotation-securing positive guide (8, 12) is present which permits an axial relative movement between push-button (7) and sleeve (9), but stops a rotating relative movement between push-button (7) and sleeve (9).

8. Locking bolt (1) according to claim 7, **characterised in that** the rotation-securing guide (8, 12) between push-button (7) and sleeve (9) is effected by a hexagonal guide, and the push-button (7) has a hexagonal recess (8) which substantially matches an assigned external hexagon (12) of the sleeve (9) and the hexagonal recess (8) of the push-button (7) at least partly covers the external hexagon (12) of the sleeve (9) both in the moved-in rest/unlocked position (30) and also in the moved-out working/locked position (27) of the locking pin (2).

9. Locking bolt (1) according to one of claims 1 to 8, **characterised in that** the ball is cured and runs along in a cured track of the locking pin (2).

10. Locking bolt (1) according to one of claims 1 to 9, **characterised in that** the push-button (7) is designed like a pot.

## Revendications

1. Boulon d'arrêt (1) avec un mécanisme de verrouillage (5, 18), avec une douille (9) apte à être fixée à un élément de machine, et une tige d'arrêt (2) qui est reliée à un bouton (7) et qui est apte à coulisser dans un perçage de passage (10) de la douille (9) axialement à l'encontre et à l'aide de la force d'un ressort (13) grâce à l'actionnement du bouton (7), moyennant quoi la tige d'arrêt (2) est apte à être amenée à l'aide du mécanisme de verrouillage (5, 18) dans deux positions d'arrêt (27, 30) qui correspondent à une position de repos/déverrouillage rentrée (30) et une position de travail/verrouillage sortie (27), le mécanisme de verrouillage (5, 18) étant une sorte de mécanisme de stylo à bille, et la tige d'arrêt (2) n'étant actionnée que grâce à une pression dans le sens de verrouillage (16), sur le bouton (7), **caractérisé en ce que** le bouton (7) présente un six pans creux qui correspond à une vis à six pans, associée, de la douille (9), et **en ce que** le mécanisme de verrouillage présente une bille (18) qui est logée dans une rainure annulaire prévue sur la circonférence intérieure de la douille (9), et dans un guide de coulisse en forme de coeur (5) prévu dans l'enveloppe extérieure de la tige d'arrêt (2).

2. Boulon d'arrêt (1) avec un mécanisme de verrouillage (5, 18), avec une douille (9) apte à être fixée à un élément de machine, et une tige d'arrêt (2) qui est reliée au bouton (7) et qui est apte à coulisser dans un perçage de passage (10) douille axialement à l'encontre de la douille (9) et à l'aide d'un ressort (13) grâce à l'actionnement du bouton (7), moyennant quoi la tige d'arrêt (2) est apte à être amenée à l'aide du mécanisme de verrouillage (5, 18) dans deux positions d'arrêt (27, 30) qui correspondent à une position de repos/déverrouillage rentrée (30) et une position de travail/verrouillage sortie (27), le mécanisme de verrouillage (5, 18) étant une sorte de mécanisme de stylo à bille, et la tige d'arrêt (2) n'étant actionnée que grâce à une traction dans le sens de déverrouillage (17), sur le bouton (7), **caractérisé en ce que** le bouton (7) présente un six pans creux qui correspond à une vis à six pans, associée, de la douille (9), et **en ce que** le mécanisme de verrouillage présente une bille (18) qui est logée dans une rainure annulaire prévue sur la circonférence intérieure de la douille (9), et dans un guide de coulisse en forme de coeur (5) prévu dans l'enveloppe extérieure de la tige d'arrêt (2).

3. Boulon d'arrêt (1) selon la revendication 1 ou 2, **caractérisé en ce que** la bille (18) est logée et peut rouler dans une rainure annulaire intérieure supérieure (19), côté extrémité, fermée axialement mais continue sur la circonférence, prévue dans l'enveloppe intérieure du perçage (10), dans la douille (9).

4. Boulon d'arrêt (1) selon la revendication 3, **caractérisé en ce que** le guide à coulisse (5) est placé dans un élément d'arrêt (4) de la tige d'arrêt (2) à laquelle est également fixé le bouton (7).

5. Boulon d'arrêt (1) selon l'une des revendications 1 à 4, **caractérisé en ce que** la douille (9) présente dans son perçage de passage (10) un épaulement intérieur (15) contre lequel le ressort (13) s'appuie avec une extrémité, le ressort (13) s'appuyant avec son autre extrémité sur un épaulement (14) entre l'élément de verrouillage (3) et l'élément d'arrêt (4) de la tige d'arrêt (2).

6. Boulon d'arrêt (1) selon l'une des revendications 1 à 5, **caractérisé en ce que** la bille (18) et le guide à coulisse (5) sont durcis en particulier par nitratation.

7. Boulon d'arrêt (1) selon l'une des revendications 1 à 6, **caractérisé en ce qu'**il est prévu, entre le bouton (7) relié à la tige d'arrêt (2) et la douille (9) qui reçoit dans son perçage de passage (10) la tige d'arrêt (2), avec un guidage axial, un guidage par complémentarité de forme anti-rotation (8, 12) qui autorise un mouvement relatif axial entre le bouton (7) et la douille (9), mais empêche un mouvement relatif de rotation entre le bouton (7) et la douille (9).

8. Boulon d'arrêt (1) selon une revendication 7, **caractérisé en ce que** le guidage anti-rotation (8, 12) entre le bouton (7) et la douille (9) est réalisé grâce à un guidage à six pans, et le bouton (7) présente un six pans creux (8) qui correspond à peu près à une vis à six pans associée (12) de la douille (9), et le six pans creux (8) du bouton (7) couvre au moins en partie la vis à six pans (12) de la douille (9), aussi bien dans la position de repos/déverrouillage rentrée (30) que dans la position de travail/verrouillage sortie (27) de la tige d'arrêt (2).

9. Boulon d'arrêt (1) selon l'une des revendications 1 à 8, **caractérisé en ce que** la bille est durcie et roule le long d'un chemin de roulement durci de la tige d'arrêt (2) .

10. Boulon d'arrêt (1) selon l'une des revendications 1 à 9, **caractérisé en ce que** le bouton (7) a la forme d'un godet.
